(19) Europäisches Patentamt
European Patent Office
Office européen des brevets

(11) **EP 4 637 241 A1**

(12) **EUROPEAN PATENT APPLICATION**
published in accordance with Art. 153(4) EPC

(43) Date of publication:
**22.10.2025 Bulletin 2025/43**

(21) Application number: **23914603.8**

(22) Date of filing: **29.12.2023**

(51) International Patent Classification (IPC):
***H04W 72/0453*** (2023.01)

(52) Cooperative Patent Classification (CPC):
**H04L 5/00; H04W 72/0453**

(86) International application number:
**PCT/CN2023/143303**

(87) International publication number:
**WO 2024/146471 (11.07.2024 Gazette 2024/28)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **03.01.2023 CN 202310002176**

(71) Applicant: **Huawei Technologies Co., Ltd.
Shenzhen, Guangdong 518129 (CN)**

(72) Inventors:
• **XU, Jun
  Shenzhen, Guangdong 518129 (CN)**
• **GAO, Junhui
  Shenzhen, Guangdong 518129 (CN)**
• **JIN, Huangping
  Shenzhen, Guangdong 518129 (CN)**

(74) Representative: **Goddar, Heinz J.
Boehmert & Boehmert
Anwaltspartnerschaft mbB
Pettenkoferstrasse 22
80336 München (DE)**

(54) **COMMUNICATION METHOD AND APPARATUS**

(57) This application provides a communication method and apparatus. A DMRS type is a type 1, and a quantity of DMRS ports in a DMRS port set is greater than 4, that is, a quantity of DMRS ports supported on a single symbol is greater than 4. Alternatively, a DMRS type is a type 2, and a quantity of DMRS ports in a DMRS port set is greater than 6, that is, a quantity of DMRS ports supported on a single symbol is greater than 6. This means that when the quantity of DMRS ports supported on the single symbol increases, a terminal device may determine, based on an index of a first DMRS port associated with a first PTRS port, a first offset index, and a preset correspondence, a frequency domain position occupied by the first PTRS port. In this way, the frequency domain position occupied by the PTRS port is determined when the quantity of DMRS ports supported on the single symbol increases.

| Terminal device | Network device |
| --- | --- |

401: Receive first information and second information that are sent by the network device, where the first information indicates an index of a first DMRS port in a DMRS port set associated with a first PTRS port, and the second information indicates a first offset index; a DMRS type is a type 1, and a quantity of DMRS ports in the DMRS port set is greater than 4; or a DMRS type is a type 2, and a quantity of DMRS ports in the DMRS port set is greater than 6; and a frequency domain position occupied by the first PTRS port is determined based on the index of the first DMRS port, the first offset index, and a preset correspondence

FIG. 4

Processed by Luminess, 75001 PARIS (FR)

## Description

This application claims priority to Chinese Patent Application No. 202310002176.X, filed with the China National Intellectual Property Administration on January 3, 2023 and entitled "COMMUNICATION METHOD AND APPARATUS", which is incorporated herein by reference in its entirety.

## TECHNICAL FIELD

This application relates to the field of communication technologies, and in particular, to a communication method and apparatus.

## BACKGROUND

With rapid development of communication technologies, requirements for a communication rate and a communication capacity gradually increase, and a requirement for high-frequency resources increases accordingly. However, a frequency increase is accompanied with an increase of phase noise generated by random jitter of a frequency component, namely, a local oscillator. Therefore, impact of the phase noise cannot be ignored in high-frequency wireless communication. Generally, a terminal device may send a phase tracking reference signal (phase tracking reference signal, PTRS), so that a network device can estimate phase noise based on the received PTRS. Before the terminal device sends the PTRS, the terminal device needs to learn of a frequency domain position occupied by a PTRS port. However, how to determine the frequency domain position occupied by the PTRS port is still lacking currently.

## SUMMARY

This application provides a communication method and apparatus, to determine a frequency domain position occupied by a PTRS port.

According to a first aspect, a communication method is provided, including: receiving first information and second information from a network device, where the first information indicates an index of a first demodulation reference signal (demodulation reference signal, DMRS) port, in a DMRS port set, associated with a first PTRS port, and the second information indicates a first offset index; a DMRS type is a type 1, and a quantity of DMRS ports in the DMRS port set is greater than 4; or a DMRS type is a type 2, and a quantity of DMRS ports in the DMRS port set is greater than 6; and a frequency domain position occupied by the first PTRS port is determined based on the index of the first DMRS port, the first offset index, and a preset correspondence. It can be learned that the DMRS type is the type 1, and the quantity of DMRS ports in the DMRS port set is greater than 4, that is, a quantity of DMRS ports supported on a single symbol is greater than 4. Alternatively, the DMRS type is the type 2, and the quantity of DMRS ports in the DMRS port set is greater than 6, that is, a quantity of DMRS ports supported on a single symbol is greater than 6. This means that when the quantity of DMRS ports supported on the single symbol increases, a terminal device may determine, based on the index of the first DMRS port associated with the first PTRS port, the first offset index, and the preset correspondence, the frequency domain position occupied by the first PTRS port. In this way, the frequency domain position occupied by the PTRS port is determined when the quantity of DMRS ports supported on the single symbol increases.

In this application, the preset correspondence includes a correspondence between an index of a DMRS port in the DMRS port set, an offset index, and an offset.

With reference to the first aspect, optionally, the method further includes: receiving third information from the network device, where the third information indicates a DMRS port capacity expansion manner, and the capacity expansion manner includes a first capacity expansion manner or a second capacity expansion manner. In this way, the terminal device may learn a specific manner in which the DMRS port is added.

With reference to the first aspect, optionally, an offset corresponding to the index of the first DMRS port and the first offset index is determined based on an offset corresponding to an index of a second DMRS port in the DMRS port set and the first offset index, and the index of the first DMRS port has an association relationship with the index of the second DMRS port. It can be learned that, because the offset corresponding to the index of the first DMRS port and the first offset index is determined based on the offset corresponding to the first offset index and the index of the second DMRS port that is in the DMRS port set and that has the association relationship with the index of the first DMRS port, frequency domain positions of different PTRS ports associated with DMRS ports in a same code division multiplexing (code division multiplexing, CDM) group do not overlap, thereby avoiding interference.

With reference to the first aspect, optionally, that the index of the first DMRS port has the association relationship with the index of the second DMRS port includes: the DMRS type is the type 1, the capacity expansion manner is the first capacity expansion manner, the index of the first DMRS port is a first index, and a difference between the index of the first DMRS port and the index of the second DMRS port is 8.

With reference to the first aspect, optionally, the offset $R_{offset1}$ corresponding to the index of the first DMRS port and the first offset index satisfies the following formula: $R_{offset1} = (R_{offset2} + 4)mod12$, where $R_{offset2}$ is the offset corresponding to the index of the second DMRS port and the first offset index. In this way, when the DMRS type is the type 1 and the DMRS port capacity expansion manner is the first capacity expansion manner, frequency domain positions of different PTRS ports associated with DMRS ports in a same CDM group do not overlap, thereby avoiding interference.

With reference to the first aspect, optionally, that the index of the first DMRS port has the association relationship with the index of the second DMRS port includes: the DMRS type is the type 1, the capacity expansion manner is the second capacity expansion manner, the index of the first DMRS port is a second index, and a difference between the index of the first DMRS port and the index of the second DMRS port is 8 or 10.

With reference to the first aspect, optionally, the offset $R_{offset1}$ corresponding to the index of the first DMRS port and the first offset index satisfies the following formula: $R_{offset1} = (R_{offset2} + 4)mod12$; $R_{offset1} = (R_{offset2} + 8)mod12$; $R_{offset1} = (R_{offset2} + 6)mod24$; or $R_{offset1} = (R_{offset2} + 12)mod24$, where $R_{offset2}$ is the offset corresponding to the index of the second DMRS port and the first offset index. In this way, when the DMRS type is the type 1 and the DMRS port capacity expansion manner is the second capacity expansion manner, frequency domain positions of different PTRS ports associated with DMRS ports in a same CDM group do not overlap, thereby avoiding interference. In addition, under different offset indexes, an overlapping degree of frequency domain positions of different PTRS ports associated with DMRS ports in a same CDM group may be reduced.

With reference to the first aspect, optionally, that the index of the first DMRS port has the association relationship with the index of the second DMRS port includes: the DMRS type is the type 2, the capacity expansion manner is the first capacity expansion manner, the index of the first DMRS port is a third index, and a difference between the index of the first DMRS port and the index of the second DMRS port is 12.

With reference to the first aspect, optionally, the offset $R_{offset1}$ corresponding to the index of the first DMRS port and the first offset index satisfies the following formula: $R_{offset1} = (R_{offset2} + 6)mod12$, where $R_{offset2}$ is the offset corresponding to the index of the second DMRS port and the first offset index. In this way, when the DMRS type is the type 2 and the DMRS port capacity expansion manner is the first capacity expansion manner, frequency domain positions of different PTRS ports associated with DMRS ports in a same CDM group do not overlap, thereby avoiding interference.

With reference to the first aspect, optionally, that the index of the first DMRS port has the association relationship with the index of the second DMRS port includes: the DMRS type is the type 2, the capacity expansion manner is the second capacity expansion manner, the index of the first DMRS port is a fourth index, and a difference between the index of the first DMRS port and the index of the second DMRS port is 12 or 14.

With reference to the first aspect, optionally, the offset $R_{offset1}$ corresponding to the index of the first DMRS port and the first offset index satisfies the following formula: $R_{offset1} = (R_{offset2} + 6)mod12$ ; $R_{offset1} = (R_{offset2} + 6)mod24$ ; or $R_{offset1} = (R_{offset2} + 12)mod24$, where $R_{offset2}$ is the offset corresponding to the index of the second DMRS port and the first offset index. In this way, when the DMRS type is the type 2 and the DMRS port capacity expansion manner is the second capacity expansion manner, frequency domain positions of different PTRS ports associated with DMRS ports in a same CDM group do not overlap, thereby avoiding interference. In addition, under different offset indexes, an overlapping degree of frequency domain positions of different PTRS ports associated with DMRS ports in a same CDM group may be reduced.

According to a second aspect, a communication apparatus is provided. The communication apparatus includes a module configured to perform the method according to any one of the implementations of the first aspect.

According to a third aspect, a communication apparatus is provided, including a processor. The processor is coupled to a memory. The memory stores a computer program. The processor is configured to invoke the computer program in the memory, so that the communication apparatus performs the method according to any one of the implementations of the first aspect.

According to a fourth aspect, a communication apparatus is provided, including a processor and an interface circuit. The interface circuit is configured to: receive a signal from a communication apparatus other than the communication apparatus and transmit the signal to the processor, or send a signal from the processor to a communication apparatus other than the communication apparatus. The processor is configured to implement the method according to any one of the implementations of the first aspect by using a logic circuit or by executing code instructions.

According to a fifth aspect, a computer-readable storage medium is provided. The storage medium stores a computer program or instructions. When the computer program or the instructions are executed by a computer, the method according to any one of the implementations of the first aspect is implemented.

According to a sixth aspect, a computer program product is provided. When a computer reads and executes the computer program product, the computer is enabled to perform the method according to any one of the implementations of the first aspect.

According to a seventh aspect, a communication system is provided, including a terminal device configured to perform the method according to any one of the implementations of the first aspect.

**BRIEF DESCRIPTION OF DRAWINGS**

The following briefly describes the accompanying drawings used for describing embodiments.

FIG. 1 is a diagram of time-frequency resources of a double-symbol DMRS;
FIG. 2A shows a basic architecture of a communication system according to an embodiment of this application;
FIG. 2B is a diagram of interaction between a network device and a terminal device according to an embodiment of this application;
FIG. 3 is a diagram of a hardware structure applicable to a communication apparatus according to an embodiment of this application;
FIG. 4 is a schematic flowchart of a communication method according to an embodiment of this application;
FIG. 5 is a diagram of a structure of a communication apparatus according to an embodiment of this application;
FIG. 6 is a diagram of a simplified structure of a terminal device according to an embodiment of this application; and
FIG. 7 is a diagram of a simplified structure of a network device according to an embodiment of this application.

**DESCRIPTION OF EMBODIMENTS**

For ease of understanding, some concepts related to embodiments of this application are described for reference by using examples below. Details are as follows.

1. Antenna port

In this application, the antenna port may be understood as a transmit antenna that can be identified by a receive end device, or a transmit antenna that can be spatially distinguished. One antenna port may be one physical antenna in a transmit end device, or may be a weighted combination of a plurality of physical antennas in the transmit end device. It should be noted that one antenna port may correspond to one reference signal, that is, an antenna port for sending and/or receiving a reference signal may be referred to as a reference signal port. For example, a DMRS port may be understood as an antenna port for sending and/or receiving a DMRS.

2. Code division multiplexing (code division multiplexing, CDM) group

One CDM group may include one or more DMRS ports, and these DMRS ports use a same time-frequency resource but different orthogonal cover codes (orthogonal cover codes, OCCs) to send DMRSs. In other words, one CDM group includes one or more DMRS ports that use a same time-frequency resource for transmission.

3. DMRS

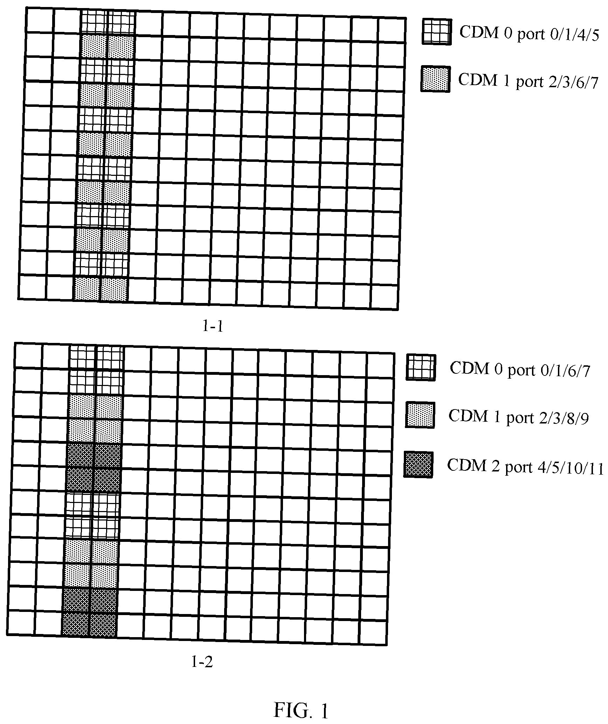

In a 5th generation mobile communication technology (5th generation mobile network, 5G), a DMRS is widely used in various important physical channels, and a most important function of the DMRS is to perform coherent demodulation, and serve demodulation of various physical channels. In an existing 3rd generation partnership project (3rd generation partnership project, 3GPP) protocol of a new radio (new radio, NR), DMRSs may be classified into a type 1 (type 1) DMRS and a type 2 (type 2) DMRS based on a maximum quantity of orthogonal ports supported by the DMRSs. Based on a quantity of symbols occupied by the DMRS, the DMRS may be further classified into a single-symbol DMRS (single-symbol DMRS) and a double-symbol DMRS (double-symbol DMRS). For example, FIG. 1 is a diagram of time-frequency resources of a double-symbol DMRS. In 1-1 in FIG. 1, a DMRS type is a type 1, a single symbol may support a maximum of four ports, and a double symbol may support a maximum of eight ports, including two CDM groups (a CDM group 0 and a CDM group 1). Each DMRS port occupies six resource elements (resource elements, REs) in one resource block (resource block, RB) (one RB has 12 REs). Specifically, the CDM group 0 includes a DMRS port 0, a DMRS port 1, a DMRS port 4, and a DMRS port 5, and the CDM group 1 includes a DMRS port 2, a DMRS port 3, a DMRS port 6, and a DMRS port 7. An OCC corresponding to the DMRS port 0 and the DMRS port 2 is {1, 1, 1, 1}, an OCC corresponding to the DMRS port 1 and the DMRS port 3 is {1, -1, 1, -1}, an OCC corresponding to the DMRS port 4 and the DMRS port 6 is {1, 1, -1, -1}, and an OCC corresponding to the DMRS port 5 and the DMRS port 7 is {1, -1, -1, 1}. In 1-2 in FIG. 1, a DMRS type is a type 2, a single symbol may support a maximum of six ports, and a double symbol may support a maximum of 12 ports, including three CDM groups (a CDM group 0 to a CDM group 2). Each DMRS port occupies four REs in one RB. Specifically, the CDM group 0 includes a DMRS port 0, a DMRS port 1, a DMRS port 6, and a DMRS port 7, the CDM group 1 includes a DMRS port 2, a DMRS port 3, a DMRS port 8, and a DMRS port 9, and the CDM group 2 includes a DMRS port 4, a DMRS port 5, a DMRS port 10, and a DMRS port 11. An OCC corresponding to the DMRS port 0, the DMRS port 2, and the DMRS port 4 is {1, 1, 1, 1}, an OCC corresponding to the DMRS port 1, the DMRS port 3, and the DMRS port 5 is {1, -1, 1, - 1}, an OCC corresponding to the DMRS port 6, the DMRS port 8, and the DMRS port 10 is {1, 1, -1, -1}, and an OCC corresponding to the DMRS port 7, the DMRS port 9, and the DMRS port 11 is {1, -1, -1, 1}. In this application, the CDM group 0 may be understood as a CDM group whose index is 0, and other CDM groups are similar. The DMRS port 0 may be understood as a DMRS port whose index is 0, and other DMRS ports are similar.

It should be noted that, in FIG. 1, a column represents a time domain, a row represents a frequency domain, a column quantity represents a quantity of symbols, and a row quantity represents a quantity of REs in one RB.

It should be understood that the technical solutions in embodiments of this application may be applied to a long term evolution (long term evolution, LTE) architecture, a 5th generation mobile communication technology (5th generation mobile network, 5G), a WLAN system, a V2X communication system, and the like. The technical solutions in embodiments of this application may be further applied to another future communication system, for example, a 6G communication system. In the future communication system, a same function may be maintained, but a name may be changed.

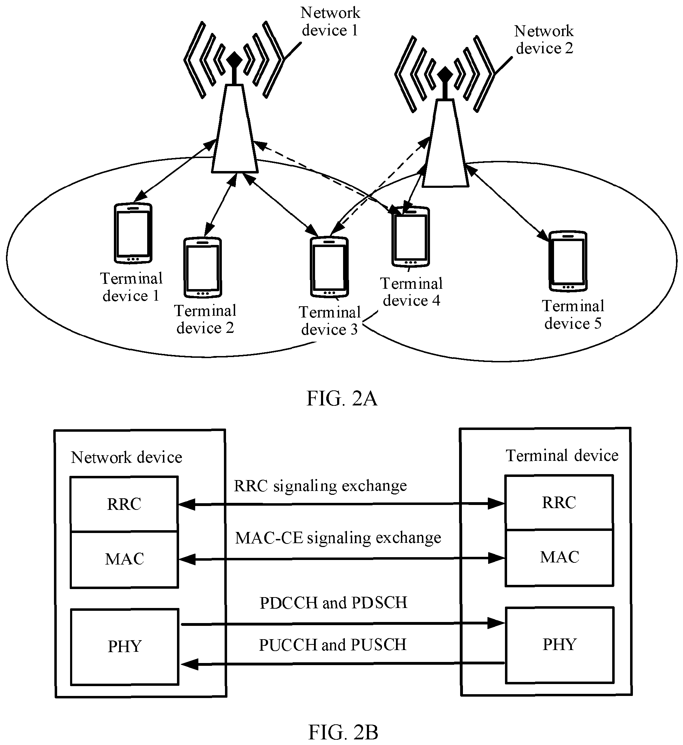

The following describes a basic architecture of a communication system provided in embodiments of this application. The communication system includes at least one network device and at least one terminal device that communicates with each network device. FIG. 2A shows a basic architecture of a communication system according to an embodiment of this application. In FIG. 2A, a network device 1 may send downlink data to a terminal device 1 to a terminal device 4, and a network device 2 may send downlink data to a terminal device 3 to a terminal device 5. Optionally, uplink data sent by the terminal device 1 to the terminal device 5 may be received by either of the network devices (for example, the terminal device 1, the terminal device 2, and the terminal device 5), or may be jointly received by two network devices (for example, the terminal device 3 and the terminal device 4). FIG. 2A is merely a diagram, and does not constitute a limitation on scenarios to which the technical solutions provided in this application are applicable.

In embodiments of this application, the network device may be a terrestrial network (terrestrial network, TN) device or a non-terrestrial network (non-terrestrial network, NTN) device.

The terrestrial network device is an entity that is on a network side and that is configured to send a signal, receive a signal, or send a signal and receive a signal. The terrestrial network device may be an apparatus that is deployed in a radio access network (radio access network, RAN) and that provides a wireless communication function for the terminal device, for example, may be a transmission reception point (transmission reception point, TRP), a base station, or control nodes in various forms, for example, a network controller, a radio controller, or a radio controller in a cloud radio access network (cloud radio access network, CRAN) scenario. Specifically, the terrestrial network device may be a macro base station, a micro base station (also referred to as a small station), a relay station, an access point (access point, AP), a radio network controller (radio network controller, RNC), a NodeB (NodeB, NB), a base station controller (base station controller, BSC), a base transceiver station (base transceiver station, BTS), a home base station (for example, a home evolved NodeB, or a home NodeB, HNB), a baseband unit (baseband unit, BBU), a transmission point (transmitting and receiving point, TRP), a transmitting point (transmitting point, TP), a mobile switching center, a satellite, an uncrewed aerial vehicle, or the like in various forms, or may be an antenna panel of a base station. The control node may be connected to a plurality of base stations, and configure resources for a plurality of terminals covered by the plurality of base stations. In systems using different radio access technologies, names of devices with the base station function may be different. For example, the device may be a gNB in 5G, a network side device in a network after 5G, a terrestrial network device in a future evolved public land mobile (communication) network (public land mobile network, PLMN), or a device that has a base station function in device-to-device (Device-to-Device, D2D) communication, machine-to-machine (Machine-to-Machine, M2M) communication, or internet of vehicles communication. A specific name of the terrestrial network device is not limited in this application. In addition, the terrestrial network device may further include a distributed unit (distributed unit, DU) and a central unit (central unit, CU).

The non-terrestrial network device may provide a wireless access service for the terminal device, schedule a radio resource for the accessed terminal device, and provide a reliable wireless transmission protocol, a data encryption protocol, and the like. The non-terrestrial network device may be a base station used for wireless communication, such as an artificial earth satellite and a high-altitude aircraft, for example, a medium earth orbit (medium earth orbit, MEO) satellite or a low earth orbit (low earth orbit, LEO) satellite in a non-geostationary earth orbit (non-geostationary earth orbit, NGEO), or a high altitude communication platform (high altitude platform station, HAPS). The terrestrial network device may also have a relay forwarding function, and transparently transmit (transparent) a wireless signal to the terminal device.

The terminal device in embodiments of this application is a user-side entity that is configured to receive a signal, send a signal, or receive a signal and send a signal. The terminal device may be configured to provide one or more of a voice service and a data connectivity service for a user. The terminal device may be a device that includes a wireless transceiver function and that can cooperate with the network device to provide a communication service for the user. Specifically, the terminal device may be UE, an access terminal, a subscriber unit, a subscriber station, a mobile station, a remote station, a remote terminal, a mobile device, a terminal, a wireless communication device, a user agent, a user apparatus, or a road side unit (road side unit, RSU). The terminal device may alternatively be an uncrewed aerial vehicle, an internet of things (internet of things, IoT) device, a station (station, ST) in a WLAN, a cellular phone (cellular phone), a smartphone (smartphone), a cordless phone, a wireless data card, a tablet computer, a session initiation protocol (session initiation protocol, SIP) phone, a wireless local loop (wireless local loop, WLL) station, a personal digital assistant (personal digital assistant, PDA) device, a laptop computer (laptop computer), a machine type communication (machine type communication, MTC) terminal, a handheld device with a wireless communication function, a computing device or another processing device connected to a wireless modem, a vehicle-mounted device, a wearable device (also referred to as a wearable intelligent device), a virtual reality (virtual reality, VR) terminal, an augmented reality (augmented reality, AR) terminal, a wireless terminal in industrial control (industrial control), a wireless terminal in self-driving (self-driving), a wireless terminal in telemedicine (remote medical), a wireless terminal in a smart grid (smart grid), a wireless terminal in transportation safety (transportation safety), a wireless terminal in a smart city (smart city), a wireless terminal in a smart home (smart home), or the like. The terminal device may alternatively be a device-to-device (device-to-device, D2D) device, for example, an electricity meter or a water meter. Alternatively, the terminal device may be a terminal in a 5G system, or a terminal in a next generation communication system. This is not limited in embodiments of this application.

FIG. 2B is a diagram of interaction between a network device and a terminal device according to an embodiment of this application. As shown in FIG. 2B, a radio resource control (radio resource control, RRC) signaling exchange module is a module used by the network device and the terminal device to send and receive RRC signaling. A media access control (media access control, MAC) signaling exchange module is a module used by the network device and the terminal device to send and receive MAC control element (control element, CE) signaling. A physical (physical, PHY) signaling and data exchange module is a module used by the network device and the terminal device to send and receive one or more of uplink control signaling, downlink control signaling, uplink data, and downlink data, and the like. The downlink data may be, for example, one or more of a physical downlink control channel (physical downlink control channel, PDCCH), a physical downlink shared channel (physical downlink shared channel, PDSCH), or the like, and the uplink data may be, for example, one or more of a physical uplink shared channel (physical uplink shared channel, PUSCH), a physical uplink control channel (physical uplink control channel, PUCCH), and the like.

Optionally, the devices in FIG. 2A may be implemented by one device, may be jointly implemented by a plurality of devices, or may be one functional module in one device. This is not specifically limited in this embodiment of this application. It may be understood that the foregoing function may be a network element in a hardware device, a software function running on dedicated hardware, or a virtualization function instantiated on a platform (for example, a cloud platform).

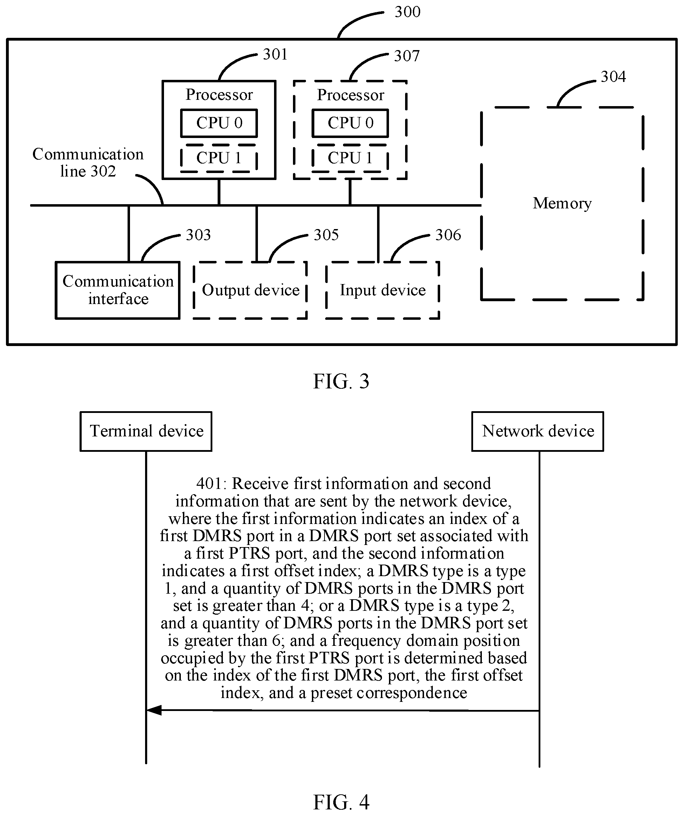

For example, each device in FIG. 2A may be implemented by using a communication apparatus 300 in FIG. 3. FIG. 3 is a diagram of a hardware structure applicable to a communication apparatus according to an embodiment of this application. The communication apparatus 300 includes at least one processor 301, a communication line 302, and at least one communication interface 303. Optionally, the communication apparatus 300 may further include a memory 304.

The processor 301 may be a general-purpose central processing unit (central processing unit, CPU), a microprocessor, an application-specific integrated circuit (application-specific integrated circuit, ASIC), or one or more integrated circuits configured to control program execution of the solutions of this application.

The communication line 302 may include a path for transmitting information between the foregoing components.

The communication interface 303 is an apparatus (like an antenna) like any transceiver, and is configured to communicate with another device or a communication network. The another device may be, for example, a RAN. The communication network may be, for example, an Ethernet or a wireless local area network (wireless local area network, WLAN).

The memory 304 may be a read-only memory (read-only memory, ROM) or another type of static storage device that can store static information and instructions, a random access memory (random access memory, RAM), or another type of dynamic storage device that can store information and instructions, or may be an electrically erasable programmable read-only memory (electrically erasable programmable read-only memory, EEPROM), a compact disc read-only memory (compact disc read-only memory, CD-ROM), or another optical disc storage, an optical disk storage (including a compact disc, a laser disc, an optical disc, a digital versatile disc, a Blu-ray disc, and the like), a magnetic disk storage medium or another magnetic storage device, or any other medium that can be used to carry or store expected program code in a form of an instruction or a data structure and that can be accessed by a computer, but is not limited thereto. The memory may exist independently, and is connected to the processor through the communication line 302. The memory may alternatively be integrated with the processor. The memory provided in embodiments of this application may be usually non-volatile.

The memory 304 is configured to store computer-executable instructions for executing the solutions of this application, and the execution is controlled by the processor 301. The processor 301 is configured to execute the computer-executable instructions stored in the memory 304, to implement methods provided in the following embodiments of this application.

Optionally, the computer-executable instructions in this embodiment of this application may also be referred to as application program code. This is not specifically limited in this embodiment of this application.

In a possible implementation, the processor 301 may include one or more CPUs, for example, a CPU 0 and a CPU 1 in FIG. 3.

In a possible implementation, the communication apparatus 300 may include a plurality of processors, for example, the processor 301 and a processor 307 in FIG. 3. Each of the processors may be a single-core (single-CPU) processor, or may be a multi-core (multi-CPU) processor. The processor herein may be one or more devices, circuits, and/or processing cores configured to process data (for example, computer program instructions).

In a possible implementation, the communication apparatus 300 may further include an output device 305 and an input device 306. The output device 305 communicates with the processor 301, and may display information in a plurality of manners. For example, the output device 305 may be a liquid crystal display (liquid crystal display, LCD), a light emitting diode (light emitting diode, LED) display device, a cathode ray tube (cathode ray tube, CRT) display device, or a projector (projector). The input device 306 communicates with the processor 301, and may receive an input of a user in a plurality of manners. For example, the input device 306 may be a mouse, a keyboard, a touchscreen device, or a sensor device.

The foregoing communication apparatus 300 may be a general-purpose device or a special-purpose device. In a specific implementation, the communication apparatus 300 may be a desktop computer, a portable computer, a network server, a palmtop computer (personal digital assistant, PDA), a mobile phone, a tablet computer, a wireless terminal device, an embedded device, or a device having a similar structure in FIG. 3. A type of the communication apparatus 300 is not limited in embodiments of this application.

FIG. 4 is a schematic flowchart of a communication method according to an embodiment of this application. As shown in FIG. 4, the method includes but is not limited to the following step.

401: A terminal device receives first information and second information that are sent by a network device, where the first information indicates an index of a first DMRS port, in a DMRS port set, associated with a first PTRS port, and the second information indicates a first offset index; a DMRS type is a type 1, and a quantity of DMRS ports in the DMRS port set is greater than 4; or a DMRS type is a type 2, and a quantity of DMRS ports in the DMRS port set is greater than 6; and a frequency domain position occupied by the first PTRS port is determined based on the index of the first DMRS port, the first offset index, and a preset correspondence.

Correspondingly, the network device sends the first information and the second information to the terminal device.

For example, the first information may be carried in downlink control information (downlink control information, DCI), and the second information may be carried in radio resource control (radio resource control, RRC) signaling.

In this application, the quantity of DMRS ports in the DMRS port set may be understood as, for example, a quantity of DMRS ports supported on a single symbol.

In this application, the preset correspondence includes a correspondence between an index of a DMRS port in the DMRS port set, an offset index, and an offset. The offset index may be, for example, 00, 01, 10, or 11.

Optionally, the method further includes: The terminal device receives third information from the network device. Correspondingly, the network device sends the third information to the terminal device. The third information indicates a DMRS port capacity expansion manner, and the capacity expansion manner includes a first capacity expansion manner or a second capacity expansion manner. In this way, the terminal device may learn a specific manner in which the DMRS port is added.

In this application, the first capacity expansion manner may be understood as uniform capacity expansion, and the second capacity expansion manner may be understood as non-uniform capacity expansion; or the first capacity expansion manner may be understood as non-uniform capacity expansion, and the second capacity expansion manner may be understood as uniform capacity expansion. In other words, the DMRS port set includes a plurality of DMRS port subsets. Uniform capacity expansion means that quantities of DMRS ports included in different DMRS port subsets in the plurality of DMRS port subsets are the same, and non-uniform capacity expansion means that a quantity of DMRS ports included in at least one DMRS port subset in the plurality of DMRS port subsets is different from a quantity of DMRS ports included in another DMRS port subset. One DMRS port subset may be understood as one CDM group.

For example, the DMRS type is the type 1, a quantity of DMRS ports included in a CDM group 0 is 4, and a quantity of DMRS ports included in a CDM group 1 is 4. In this case, the DMRS port set includes two DMRS port subsets, and quantities of DMRS ports included in the two DMRS port subsets are both 4. This may be referred to as uniform capacity expansion. For another example, the DMRS type is the type 2, a quantity of DMRS ports included in a CDM group 0 is 4, a quantity of DMRS ports included in a CDM group 1 is 4, and a quantity of DMRS ports included in a CDM group 2 is 4. In this case, the DMRS port set includes three DMRS port subsets, and quantities of DMRS ports included in the three DMRS port subsets are all 4. This may be referred to as uniform capacity expansion.

For example, the DMRS type is the type 1, a quantity of DMRS ports included in a CDM group 0 is 6, and a quantity of DMRS ports included in a CDM group 1 is 2. In this case, the DMRS port set includes two DMRS port subsets, and quantities of DMRS ports included in the two DMRS port subsets are different. This may be referred to as non-uniform capacity expansion. For another example, the DMRS type is the type 2, a quantity of DMRS ports included in a CDM group 0 is 6, a quantity of DMRS ports included in a CDM group 1 is 4, and a quantity of DMRS ports included in a CDM group 2 is 2. In this case, the DMRS port set includes three DMRS port subsets, and quantities of DMRS ports included in the three DMRS port subsets are different. This may be referred to as non-uniform capacity expansion.

Optionally, an offset corresponding to the index of the first DMRS port and the first offset index is determined based on an offset corresponding to an index of a second DMRS port in the DMRS port set and the first offset index, and the index of the first DMRS port has an association relationship with the index of the second DMRS port. It can be learned that, because the offset corresponding to the index of the first DMRS port and the first offset index is determined based on the offset corresponding to the first offset index and the index of the second DMRS port that is in the DMRS port set and that has the association relationship with the index of the first DMRS port, frequency domain positions of different PTRS ports associated with DMRS ports in a same CDM group do not overlap, thereby avoiding interference.

That the index of the first DMRS port has the association relationship with the index of the second DMRS port may be implemented by using any one of Example 1 to Example 4. A specific one may depend on a specific implementation, a pre-agreement, a definition in a standard, or the like.

Example 1

That the index of the first DMRS port has the association relationship with the index of the second DMRS port includes: the DMRS type is the type 1, the capacity expansion manner is the first capacity expansion manner, the index of the first DMRS port is a first index, and a difference between the index of the first DMRS port and the index of the second DMRS port is 8. In a possible implementation, the first index may be, for example, any one of 8 to 11. In another possible implementation, the first index may be, for example, any one of 1008 to 1011.

Optionally, the offset $R_{offset1}$ corresponding to the index of the first DMRS port and the first offset index satisfies the following formula: $R_{offset1} = (R_{offset2} + 4)mod12$, where $R_{offset2}$ is the offset corresponding to the index of the second DMRS port and the first offset index. In this application, $mod()$ represents modulo. In this way, when the DMRS type is the type 1 and the DMRS port capacity expansion manner is the first capacity expansion manner, frequency domain positions of different PTRS ports associated with DMRS ports in a same CDM group do not overlap, thereby avoiding interference.

For example, in Table 1, the DMRS type is the type 1, and the capacity expansion manner is the first capacity expansion manner. That is, the quantity of DMRS ports in the DMRS port set is 8, the DMRS port set includes two DMRS port subsets, and a quantity of DMRS ports included in the two DMRS port subsets is 4. That is, a CDM group 0 includes a DMRS port 0, a DMRS port 1, a DMRS port 8, and a DMRS port 9, a CDM group 1 includes a DMRS port 2, a DMRS port 3, a DMRS port 10, and a DMRS port 11, and the DMRS port 8, the DMRS port 9, the DMRS port 10, and the DMRS port 11 are newly added DMRS ports. If the index of the first DMRS port is 8, the index of the second DMRS port is 0, and the first offset index is 00, $R_{offset1} = 4 = (0 + 4)mod12$. If the index of the first DMRS port is 9, the index of the second DMRS port is 1, and the first offset index is 00, $R_{offset1} = 6 = (2 + 4)mod12$. If the index of the first DMRS port is 10, the index of the second DMRS port is 2, and the first offset index is 00, $R_{offset1} = 5 = (1 + 4)mod12$. If the index of the first DMRS port is 11, the index of the second DMRS port is 3, and the first offset index is 00, $R_{offset1} = 7 = (3 + 4)mod12$. Others are similar. Details are not described herein again.

Table 1

| Index of a DMRS port $\tilde{p}$ | $K_{REF}^{RE}$ | | | |
|---|---|---|---|---|
| | DMRS configuration type 1 (DMRS configuration type 1) | | | |
| | Resource element offset (resource element offset) | | | |
| | Offset 00 (offset 00) | Offset 01 | Offset 10 | Offset 11 |
| 0 | 0 | 2 | 6 | 8 |
| 1 | 2 | 4 | 8 | 10 |
| 2 | 1 | 3 | 7 | 9 |
| 3 | 3 | 5 | 9 | 11 |
| 8 | 4 | 6 | 10 | 0 |
| 9 | 6 | 8 | 0 | 2 |
| 10 | 5 | 7 | 11 | 1 |
| 11 | 7 | 9 | 1 | 3 |

Example 2

That the index of the first DMRS port has the association relationship with the index of the second DMRS port includes: the DMRS type is the type 1, the capacity expansion manner is the second capacity expansion manner, the index of the first DMRS port is a second index, and a difference between the index of the first DMRS port and the index of the second DMRS port is 6, 8, or 10. Specifically, when the second index is 8, 9, 1008, or 1009, the difference between the index of the first DMRS port and the index of the second DMRS port is 6 or 8; or when the second index is 10, 11, 1010, or 1011, the difference between the index of the first DMRS port and the index of the second DMRS port is 8 or 10.

Optionally, the offset $R_{offset1}$ corresponding to the index of the first DMRS port and the first offset index satisfies the following formula: $R_{offset1} = (R_{offset2} + 4)mod12$; $R_{offset1} = (R_{offset2} + 8)mod12$; $R_{offset1} = (R_{offset2} + 6)mod24$; or $R_{offset1} = (R_{offset2} + 12)mod24$, where $R_{offset2}$ is the offset corresponding to the index of the second DMRS port and the first offset index. In a possible implementation, the second index is 8, 9, 1008, or 1009, and $R_{offset1} = (R_{offset2} + 4)mod12$; or $R_{offset1} = (R_{offset2} + 6)mod24$. In another possible implementation, the second index is 10, 11, 1010, or 1011, and $R_{offset1} = (R_{offset2} + 8)mod12$; or $R_{offset1} = (R_{offset2} + 12)mod24$. In this way, when the DMRS type is the type 1 and the DMRS port capacity expansion manner is the second capacity expansion manner, frequency domain positions of different PTRS ports associated with DMRS ports in a same CDM group do not overlap, thereby avoiding interference. In addition, under different offset indexes, an overlapping degree of frequency domain positions of different PTRS ports associated with DMRS ports in a same CDM group may be reduced.

For example, in Table 2, the DMRS type is the type 1, and the capacity expansion manner is the second capacity expansion manner. That is, the quantity of DMRS ports in the DMRS port set is 8, the DMRS port set includes two DMRS port subsets, and quantities of DMRS ports included in the two DMRS port subsets are different. That is, a CDM group 0 includes a DMRS port 0, a DMRS port 1, a DMRS port 8, a DMRS port 9, a DMRS port 10, and a DMRS port 11, and a CDM group 1 includes a DMRS port 2 and a DMRS port 3. The DMRS port 8, the DMRS port 9, the DMRS port 10, and the DMRS port 11 are newly added DMRS ports. If the index of the first DMRS port is 8, the index of the second DMRS port is 0, and the first offset index is 00, $R_{offset1} = 4 = (0 + 4)mod12$. If the index of the first DMRS port is 9, the index of the second DMRS port is 1, and the first offset index is 00, $R_{offset1} = 6 = (2 + 4)mod12$. If the index of the first DMRS port is 10, the index of the second DMRS port is 0, and the first offset index is 00, $R_{offset1} = 8 = (0 + 8)mod12$. If the index of the first DMRS port is 11, the index of the second DMRS port is 1, and the first offset index is 00, $R_{offset1} = 10 = (2 + 8)mod12$. Others are similar. Details are not described herein again.

Table 2

| Index of a DMRS port $\bar{p}$ | $K_{REF}^{RE}$ | | | |
| --- | --- | --- | --- | --- |
| | DMRS configuration type 1 (DMRS configuration type 1) | | | |
| | Resource element offset (resource element offset) | | | |
| | Offset 00 (offset 00) | Offset 01 | Offset 10 | Offset 11 |
| 0 | 0 | 2 | 6 | 8 |
| 1 | 2 | 4 | 8 | 10 |
| 2 | 1 | 3 | 7 | 9 |
| 3 | 3 | 5 | 9 | 11 |
| 8 | 4 | 6 | 10 | 0 |
| 9 | 6 | 8 | 0 | 2 |
| 10 | 8 | 10 | 2 | 4 |
| 11 | 10 | 0 | 4 | 6 |

For another example, in Table 3, the DMRS type is the type 1, and the capacity expansion manner is the second capacity expansion manner. That is, the quantity of DMRS ports in the DMRS port set is 8, the DMRS port set includes two DMRS port subsets, and quantities of DMRS ports included in the two DMRS port subsets are different. That is, a CDM group 0 includes a DMRS port 0 and a DMRS port 1, and a CDM group 1 includes a DMRS port 2, a DMRS port 3, a DMRS port 8, a DMRS port 9, a DMRS port 10, and a DMRS port 11. The DMRS port 8, the DMRS port 9, the DMRS port 10, and the DMRS port 11 are newly added DMRS ports. If the index of the first DMRS port is 8, the index of the second DMRS port is 2, and the first offset index is 00, $R_{offset1} = 5 = (1 + 4)mod12$. If the index of the first DMRS port is 9, the index of the second DMRS port is 3, and the first offset index is 00, $R_{offset1} = 7 = (3 + 4)mod12$. If the index of the first DMRS port is 10, the index of the second DMRS port is 2, and the first offset index is 00, $R_{offset1} = 9 = (1 + 8)mod12$. If the index of the first DMRS port is 11, the index of the second DMRS port is 3, and the first offset index is 00, $R_{offset1} = 11 = (3 + 8)mod12$. Others are similar. Details are not described herein again.

Table 3

| Index of a DMRS port $\tilde{p}$ | $K_{REF}^{RE}$ | | | |
| | DMRS configuration type 1 (DMRS configuration type 1) | | | |
| | Resource element offset (resource element offset) | | | |
| | Offset 00 (offset 00) | Offset 01 | Offset 10 | Offset 11 |
|---|---|---|---|---|
| 0 | 0 | 2 | 6 | 8 |
| 1 | 2 | 4 | 8 | 10 |
| 2 | 1 | 3 | 7 | 9 |
| 3 | 3 | 5 | 9 | 11 |
| 8 | 5 | 7 | 11 | 1 |
| 9 | 7 | 9 | 1 | 3 |
| 10 | 9 | 11 | 3 | 5 |
| 11 | 11 | 1 | 5 | 7 |

For another example, in Table 4, the DMRS type is the type 1, and the capacity expansion manner is the second capacity expansion manner. That is, the quantity of DMRS ports in the DMRS port set is 8, the DMRS port set includes two DMRS port subsets, and quantities of DMRS ports included in the two DMRS port subsets are different. That is, a CDM group 0 includes a DMRS port 0, a DMRS port 1, a DMRS port 8, a DMRS port 9, a DMRS port 10, and a DMRS port 11, and a CDM group 1 includes a DMRS port 2 and a DMRS port 3. The DMRS port 8, the DMRS port 9, the DMRS port 10, and the DMRS port 11 are newly added DMRS ports. If the index of the first DMRS port is 8, the index of the second DMRS port is 0, and the first offset index is 00, $R_{offset1} = 6 = (0 + 6)mod24$. If the index of the first DMRS port is 9, the index of the second DMRS port is 1, and the first offset index is 00, $R_{offset1} = 8 = (2 + 6)mod24$. If the index of the first DMRS port is 10, the index of the second DMRS port is 0, and the first offset index is 00, $R_{offset1} = 12 = (0 + 12)mod24$. If the index of the first DMRS port is 11, the index of the second DMRS port is 1, and the first offset index is 00, $R_{offset1} = 14 = (2 + 12)mod24$. Others are similar. Details are not described herein again.

Table 4

| Index of a DMRS port $\tilde{p}$ | $K_{REF}^{RE}$ | | | |
| | DMRS configuration type 1 (DMRS configuration type 1) | | | |
| | Resource element offset (resource element offset) | | | |
| | Offset 00 (offset 00) | Offset 01 | Offset 10 | Offset 11 |
|---|---|---|---|---|
| 0 | 0 | 2 | 6 | 8 |
| 1 | 2 | 4 | 8 | 10 |
| 2 | 1 | 3 | 7 | 9 |
| 3 | 3 | 5 | 9 | 11 |
| 8 | 6 | 8 | 12 | 14 |
| 9 | 8 | 10 | 14 | 16 |
| 10 | 12 | 14 | 18 | 20 |
| 11 | 14 | 16 | 20 | 22 |

For another example, in Table 5, the DMRS type is the type 1, and the capacity expansion manner is the second capacity expansion manner. That is, the quantity of DMRS ports in the DMRS port set is 8, the DMRS port set includes two DMRS port subsets, and quantities of DMRS ports included in the two DMRS port subsets are different. That is, a CDM group 0 includes a DMRS port 0 and a DMRS port 1, and a CDM group 1 includes a DMRS port 2, a DMRS port 3, a DMRS port 8, a DMRS port 9, a DMRS port 10, and a DMRS port 11. The DMRS port 8, the DMRS port 9, the DMRS port 10, and the DMRS port 11 are newly added DMRS ports. If the index of the first DMRS port is 8, the index of the second DMRS port is 2, and the first offset index is 00, $R_{offset1} = 7 = (1 + 6)mod24$. If the index of the first DMRS port is 9, the index of the second DMRS port is 3, and the first offset index is 00, $R_{offset1} = 9 = (3 + 6)mod24$. If the index of the first DMRS port is 10, the index of the second DMRS port is 2, and the first offset index is 00, $R_{offset1} = 13 = (1 + 12)mod24$. If the index of the first DMRS port is 11, the index of the second DMRS port is 3, and the first offset index is 00, $R_{offset1} = 15 = (3 + 12)mod24$. Others are similar. Details are not described herein again.

Table 5

| Index of a DMRS port $\tilde{p}$ | $K_{REF}^{RE}$ | | | |
|---|---|---|---|---|
| | DMRS configuration type 1 (DMRS configuration type 1) | | | |
| | Resource element offset (resource element offset) | | | |
| | Offset 00 (offset 00) | Offset 01 | Offset 10 | Offset 11 |
| 0 | 0 | 2 | 6 | 8 |
| 1 | 2 | 4 | 8 | 10 |
| 2 | 1 | 3 | 7 | 9 |
| 3 | 3 | 5 | 9 | 11 |
| 8 | 7 | 9 | 13 | 15 |
| 9 | 9 | 8 | 10 | 17 |
| 10 | 13 | 15 | 19 | 21 |
| 11 | 15 | 17 | 21 | 23 |

Example 3

That the index of the first DMRS port has the association relationship with the index of the second DMRS port includes: the DMRS type is the type 2, the capacity expansion manner is the first capacity expansion manner, the index of the first DMRS port is a third index, and a difference between the index of the first DMRS port and the index of the second DMRS port is 12. In a possible implementation, the third index may be, for example, any one of 12 to 17. In another possible implementation, the third index may be, for example, any one of 1012 to 1017.

Optionally, the offset $R_{offset1}$ corresponding to the index of the first DMRS port and the first offset index satisfies the following formula: $R_{offset1} = (R_{offset2} + 6)mod12$, where $R_{offset2}$ is the offset corresponding to the index of the second DMRS port and the first offset index. In this way, when the DMRS type is the type 2 and the DMRS port capacity expansion manner is the first capacity expansion manner, frequency domain positions of different PTRS ports associated with DMRS ports in a same CDM group do not overlap, thereby avoiding interference.

For example, in Table 6, the DMRS type is the type 2, and the capacity expansion manner is the first capacity expansion manner. That is, the quantity of DMRS ports in the DMRS port set is 12, the DMRS port set includes three DMRS port subsets, and a quantity of DMRS ports included in the three DMRS port subsets is 4. That is, a CDM group 0 includes a DMRS port 0, a DMRS port 1, a DMRS port 12, and a DMRS port 13, a CDM group 1 includes a DMRS port 2, a DMRS port 3, a DMRS port 14, and a DMRS port 15, and a CDM group 2 includes a DMRS port 4, a DMRS port 5, a DMRS port 16, and a DMRS port 17. The DMRS port 12 to the DMRS port 17 are newly added DMRS ports. If the index of the first DMRS port is 12, the index of the second DMRS port is 0, and the first offset index is 00, $R_{offset1} = 6 = (0 + 6)mod12$. If the index of the first DMRS port is 13, the index of the second DMRS port is 1, and the first offset index is 00, $R_{offset1} = 7 = (1 + 6)mod12$. If the index of the first DMRS port is 14, the index of the second DMRS port is 2, and the first offset index is 00, $R_{offset1} = 8 = (2 + 6)mod12$. If the index of the first DMRS port is 15, the index of the second DMRS port is 3, and the first offset index is 00, $R_{offset1} = 9 = (3 + 6)mod12$. If the index of the first DMRS port is 16, the index of the second DMRS port is 4, and the first offset index is 00, $R_{offset1} = 10 = (4 + 6)mod12$. If the index of the first DMRS port is 17, the index of the second DMRS port is 5, and the first offset index is 00, $R_{offset1} = 11 = (5 + 6)mod12$. Others are similar. Details are not described herein again.

Table 6

| Index of a DMRS port $\tilde{p}$ | $K_{REF}^{RE}$ | | | |
|---|---|---|---|---|
| | DMRS configuration type 1 (DMRS configuration type 1) | | | |
| | Resource element offset (resource element offset) | | | |
| | Offset 00 (offset 00) | Offset 01 | Offset 10 | Offset 11 |
| 0 | 0 | 1 | 6 | 7 |
| 1 | 1 | 6 | 7 | 0 |
| 2 | 2 | 3 | 8 | 9 |
| 3 | 3 | 8 | 9 | 2 |
| 4 | 4 | 5 | 10 | 11 |
| 5 | 5 | 10 | 11 | 4 |
| 12 | 6 | 7 | 0 | 1 |
| 13 | 7 | 0 | 1 | 6 |
| 14 | 8 | 9 | 2 | 3 |
| 15 | 9 | 2 | 3 | 8 |
| 16 | 10 | 11 | 4 | 5 |
| 17 | 11 | 4 | 5 | 10 |

Example 4

That the index of the first DMRS port has the association relationship with the index of the second DMRS port includes: the DMRS type is the type 2, the capacity expansion manner is the second capacity expansion manner, the index of the first DMRS port is a fourth index, and a difference between the index of the first DMRS port and the index of the second DMRS port is 10, 12, or 14. Specifically, when the fourth index is any one of 12 to 15, or any one of 1012 to 1015, the difference between the index of the first DMRS port and the index of the second DMRS port is 10 or 12; or when the fourth index is either of 16 and 17, or either of 1016 and 1017, the difference between the index of the first DMRS port and the index of the second DMRS port is 12 or 14.

Optionally, the offset $R_{offset1}$ corresponding to the index of the first DMRS port and the first offset index satisfies the following formula: $R_{offset1} = (R_{offset2} + 6)mod12$ ; $R_{offset1} = (R_{offset2} + 6)mod24$; or $R_{offset1} = (R_{offset2} + 12)mod24$, where $R_{offset2}$ is the offset corresponding to the index of the second DMRS port and the first offset index. In a possible implementation, the fourth index is any one of 12 to 15, or any one of 1012 to 1015, and the offset $R_{offset1}$ corresponding to the index of the first DMRS port and the first offset index satisfies the following formula: $R_{offset1} = (R_{offset2} + 6)mod12$; or $R_{offset1} = (R_{offset2} + 12)mod24$. In another possible implementation, the fourth index is either of 16 and 17 or either of 1016 and 1017, and $R_{offset1} = (R_{offset2} + 6)mod24$. In this way, when the DMRS type is the type 2 and the DMRS port capacity expansion manner is the second capacity expansion manner, frequency domain positions of different PTRS ports associated with DMRS ports in a same CDM group do not overlap, thereby avoiding interference. In addition, under different offset indexes, an overlapping degree of frequency domain positions of different PTRS ports associated with DMRS ports in a same CDM group may be reduced.

For example, in Table 7, the DMRS type is the type 2, and the capacity expansion manner is the second capacity expansion manner. That is, the quantity of DMRS ports in the DMRS port set is 12, the DMRS port set includes three DMRS port subsets, and quantities of DMRS ports included in the three DMRS port subsets are different. That is, a CDM group 0 includes a DMRS port 0, a DMRS port 1, a DMRS port 12, a DMRS port 13, a DMRS port 14, and a DMRS port 15, a CDM group 1 includes a DMRS port 2, a DMRS port 3, a DMRS port 16, and a DMRS port 17, and a CDM group 2 includes a DMRS port 4 and a DMRS port 5. The DMRS port 12 to the DMRS port 17 are newly added DMRS ports. If the index of the first DMRS port is 12, the index of the second DMRS port is 0, and the first offset index is 00, $R_{offset1} = 6 = (0 + 6)mod24$. If the index of the first DMRS port is 13, the index of the second DMRS port is 1, and the first offset index is 00, $R_{offset1} = 7 = (1 + 6)mod24$. If the index of the first DMRS port is 14, the index of the second DMRS port is 0, and the first offset index is 00, $R_{offset1} = 12 = (0 + 12)mod24$. If the index of the first DMRS port is 15, the index of the second DMRS port is 1, and the first offset index is 00, $R_{offset1} = 13 = (1 + 12)mod24$. If the index of the first DMRS port is 16, the index of the second DMRS port is 2, and the first offset index is 00, $R_{offset1} = 8 = (2 + 6)mod12$. If the index of the first DMRS port is 17, the index of the second DMRS port is 3, and the first offset index is 00, $R_{offset1} = 9 = (3 + 6)mod12$. Others are similar. Details are not described herein again.

Table 7

| Index of a DMRS port $\bar{p}$ | $K_{REF}^{RE}$ | | | |
|---|---|---|---|---|
| | DMRS configuration type 1 (DMRS configuration type 1) | | | |
| | Resource element offset (resource element offset) | | | |
| | Offset 00 (offset 00) | Offset 01 | Offset 10 | Offset 11 |
| 0 | 0 | 1 | 6 | 7 |
| 1 | 1 | 6 | 7 | 0 |
| 2 | 2 | 3 | 8 | 9 |
| 3 | 3 | 8 | 9 | 2 |
| 4 | 4 | 5 | 10 | 11 |
| 5 | 5 | 10 | 11 | 4 |
| 12 | 6 | 7 | 12 | 13 |
| 13 | 7 | 12 | 13 | 6 |
| 14 | 12 | 13 | 18 | 19 |
| 15 | 13 | 18 | 19 | 12 |
| 16 | 8 | 9 | 2 | 8 |
| 17 | 9 | 2 | 3 | 3 |

For another example, in Table 8, the DMRS type is the type 2, and the capacity expansion manner is the second capacity expansion manner. That is, the quantity of DMRS ports in the DMRS port set is 12, the DMRS port set includes three DMRS port subsets, and quantities of DMRS ports included in the three DMRS port subsets are different. That is, a CDM group 0 includes a DMRS port 0, a DMRS port 1, a DMRS port 12, a DMRS port 13, a DMRS port 14, and a DMRS port 15, a CDM group 1 includes a DMRS port 2 and a DMRS port 3, and a CDM group 2 includes a DMRS port 4, a DMRS port 5, a DMRS port 16, and a DMRS port 17. The DMRS port 12 to the DMRS port 17 are newly added DMRS ports. If the index of the first DMRS port is 12, the index of the second DMRS port is 0, and the first offset index is 00, $R_{offset1} = 6 = (0 + 6)mod24$. If the index of the first DMRS port is 13, the index of the second DMRS port is 1, and the first offset index is 00, $R_{offset1} = 7 = (1 + 6)mod24$. If the index of the first DMRS port is 14, the index of the second DMRS port is 0, and the first offset index is 00, $R_{offset1} = 12 = (0 + 12)mod24$. If the index of the first DMRS port is 15, the index of the second DMRS port is 1, and the first offset index is 00, $R_{offset1} = 13 = (1 + 12)mod24$. If the index of the first DMRS port is 16, the index of the second DMRS port is 4, and the first offset index is 00, $R_{offset1} = 10 = (4 + 6)mod12$. If the index of the first DMRS port is 17, the index of the second DMRS port is 5, and the first offset index is 00, $R_{offset1} = 11 = (5 + 6)mod12$. Others are similar. Details are not described herein again.

Table 8

| Index of a DMRS port $\bar{p}$ | $K_{REF}^{RE}$ | | | |
|---|---|---|---|---|
| | DMRS configuration type 1 (DMRS configuration type 1) | | | |
| | Resource element offset (resource element offset) | | | |
| | Offset 00 (offset 00) | Offset 01 | Offset 10 | Offset 11 |
| 0 | 0 | 1 | 6 | 7 |
| 1 | 1 | 6 | 7 | 0 |
| 2 | 2 | 3 | 8 | 9 |
| 3 | 3 | 8 | 9 | 2 |
| 4 | 4 | 5 | 10 | 11 |

(continued)

| Index of a DMRS port $\tilde{p}$ | $K_{REF}^{RE}$ DMRS configuration type 1 (DMRS configuration type 1) Resource element offset (resource element offset) | | | |
|---|---|---|---|---|
| | Offset 00 (offset 00) | Offset 01 | Offset 10 | Offset 11 |
| 5 | 5 | 10 | 11 | 4 |
| 12 | 6 | 7 | 12 | 13 |
| 13 | 7 | 12 | 13 | 6 |
| 14 | 12 | 13 | 18 | 19 |
| 15 | 13 | 18 | 19 | 12 |
| 16 | 10 | 11 | 4 | 5 |
| 17 | 11 | 4 | 5 | 10 |

For another example, in Table 9, the DMRS type is the type 2, and the capacity expansion manner is the second capacity expansion manner. That is, the quantity of DMRS ports in the DMRS port set is 12, the DMRS port set includes three DMRS port subsets, and quantities of DMRS ports included in the three DMRS port subsets are different. That is, a CDM group 0 includes a DMRS port 0 and a DMRS port 1, a CDM group 1 includes a DMRS port 2, a DMRS port 3, a DMRS port 12, a DMRS port 13, a DMRS port 14, and a DMRS port 15, and a CDM group 2 includes a DMRS port 4, a DMRS port 5, a DMRS port 16, and a DMRS port 17. The DMRS port 12 to the DMRS port 17 are newly added DMRS ports. If the index of the first DMRS port is 12, the index of the second DMRS port is 2, and the first offset index is 00, $R_{offset1} = 8 = (2 + 6)mod24$. If the index of the first DMRS port is 13, the index of the second DMRS port is 3, and the first offset index is 00, $R_{offset1} = 9 = (3 + 6)mod24$. If the index of the first DMRS port is 14, the index of the second DMRS port is 2, and the first offset index is 00, $R_{offset1} = 14 = (2 + 12)mod24$. If the index of the first DMRS port is 15, the index of the second DMRS port is 3, and the first offset index is 00, $R_{offset1} = 15 = (3 + 12)mod24$. If the index of the first DMRS port is 16, the index of the second DMRS port is 4, and the first offset index is 00, $R_{offset1} = 10 = (4 + 6)mod12$. If the index of the first DMRS port is 17, the index of the second DMRS port is 5, and the first offset index is 00, $R_{offset1} = 11 = (5 + 6)mod12$. Others are similar. Details are not described herein again.

Table 9

| Index of a DMRS port $\tilde{p}$ | $K_{REF}^{RE}$ DMRS configuration type 1 (DMRS configuration type 1) Resource element offset (resource element offset) | | | |
|---|---|---|---|---|
| | Offset 00 (offset 00) | Offset 01 | Offset 10 | Offset 11 |
| 0 | 0 | 1 | 6 | 7 |
| 1 | 1 | 6 | 7 | 0 |
| 2 | 2 | 3 | 8 | 9 |
| 3 | 3 | 8 | 9 | 2 |
| 4 | 4 | 5 | 10 | 11 |
| 5 | 5 | 10 | 11 | 4 |
| 12 | 8 | 9 | 14 | 15 |
| 13 | 9 | 14 | 15 | 8 |
| 14 | 14 | 15 | 20 | 21 |
| 15 | 15 | 20 | 21 | 14 |
| 16 | 10 | 11 | 4 | 5 |

(continued)

| Index of a DMRS port $\tilde{p}$ | $K_{REF}^{RE}$ | | | |
| --- | --- | --- | --- | --- |
| | DMRS configuration type 1 (DMRS configuration type 1) | | | |
| | Resource element offset (resource element offset) | | | |
| | Offset 00 (offset 00) | Offset 01 | Offset 10 | Offset 11 |
| 17 | 11 | 4 | 5 | 10 |

For another example, in Table 10, the DMRS type is the type 2, and the capacity expansion manner is the second capacity expansion manner. That is, the quantity of DMRS ports in the DMRS port set is 12, the DMRS port set includes three DMRS port subsets, and quantities of DMRS ports included in the three DMRS port subsets are different. That is, a CDM group 0 includes a DMRS port 0, a DMRS port 1, a DMRS port 12, a DMRS port 13, a DMRS port 14, and a DMRS port 15, a CDM group 1 includes a DMRS port 2, a DMRS port 3, a DMRS port 16, and a DMRS port 17, and a CDM group 2 includes a DMRS port 4 and a DMRS port 5. The DMRS port 12 to the DMRS port 17 are newly added DMRS ports. If the index of the first DMRS port is 12, the index of the second DMRS port is 0, and the first offset index is 00, the offset corresponding to the index of the first DMRS port and the first offset index is 7. If the index of the first DMRS port is 13, the index of the second DMRS port is 1, and the first offset index is 00, the offset corresponding to the index of the first DMRS port and the first offset index is 12. Others are similar. Details are not described herein again.

Table 10

| Index of a DMRS port $\tilde{p}$ | $K_{REF}^{RE}$ | | | |
| --- | --- | --- | --- | --- |
| | DMRS configuration type 1 (DMRS configuration type 1) | | | |
| | Resource element offset (resource element offset) | | | |
| | Offset 00 (offset 00) | Offset 01 | Offset 10 | Offset 11 |
| 0 | 0 | 1 | 6 | 7 |
| 1 | 1 | 6 | 7 | 0 |
| 2 | 2 | 3 | 8 | 9 |
| 3 | 3 | 8 | 9 | 2 |
| 4 | 4 | 5 | 10 | 11 |
| 5 | 5 | 10 | 11 | 4 |
| 12 | 7 | 12 | 13 | 18 |
| 13 | 12 | 13 | 18 | 19 |
| 14 | 18 | 19 | 0 | 1 |
| 15 | 19 | 0 | 1 | 6 |
| 16 | 14 | 15 | 20 | 21 |
| 17 | 15 | 20 | 21 | 14 |

The foregoing mainly describes the solutions provided in this application from a perspective of interaction between devices. It may be understood that in the foregoing implementations, to implement the foregoing functions, each device includes a corresponding hardware structure and/or software module for performing each function. A person skilled in the art should easily be aware that, in combination with units and algorithm steps of the examples described in embodiments disclosed in this specification, this application may be implemented by hardware or a combination of hardware and computer software. Whether a function is performed by hardware or hardware driven by computer software depends on particular applications and design constraint conditions of the technical solutions. A person skilled in the art may use different methods to implement the described functions for each particular application, but it should not be considered that the implementation goes beyond the scope of this application.

In embodiments of this application, the terminal device or the network device may be divided into functional modules based on the foregoing method examples. For example, each functional module may be obtained through division based on a corresponding function, or two or more functions may be integrated into one processing module. The integrated module may be implemented in a form of hardware, or may be implemented in a form of a software functional module. It should be noted that, in embodiments of this application, module division is an example, and is merely a logical function division. In an actual implementation, another division manner may be used.

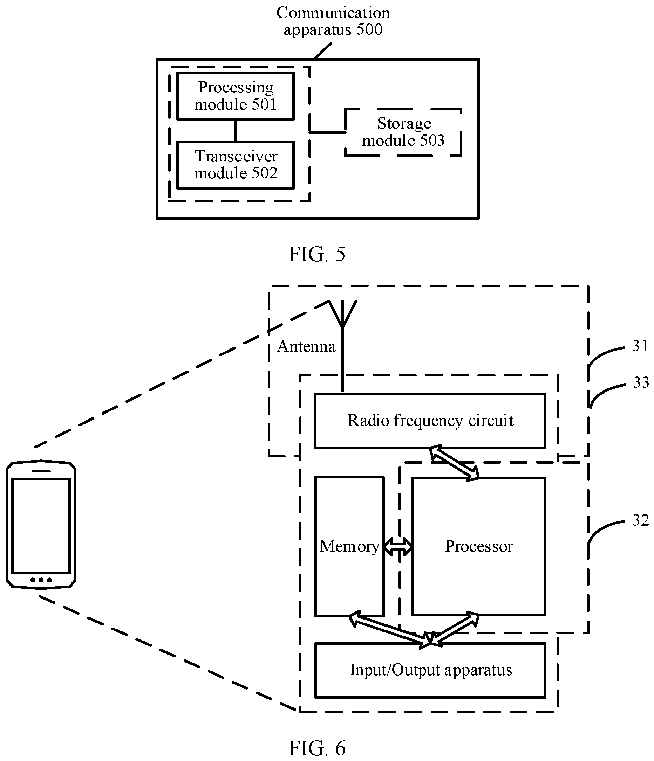

FIG. 5 is a diagram of a structure of a communication apparatus according to an embodiment of this application. The communication apparatus 500 may be used in the method shown in FIG. 4. As shown in FIG. 5, the communication apparatus 500 includes a processing module 501 and a transceiver module 502. The processing module 501 may be one or more processors, and the transceiver module 502 may be a transceiver or a communication interface. The communication apparatus may be configured to implement a function of the terminal device or the network device in any one of the foregoing method embodiments, or configured to implement a function of a network element in any one of the foregoing method embodiments. The network element or network function may be a network element in a hardware device, a software function running on dedicated hardware, or a virtualization function instantiated on a platform (for example, a cloud platform). Optionally, the communication apparatus 500 may further include a storage module 503, configured to store program code and data of the communication apparatus 500.

In an instance, when the communication apparatus is used as the terminal device or a chip used in the terminal device, the communication apparatus performs the steps performed by the terminal device in the foregoing method embodiments. The transceiver module 502 is configured to support communication with the network device and the like. The transceiver module specifically performs a sending action and/or a receiving action performed by the terminal device in the embodiment shown in FIG. 4, for example, supports the terminal device in performing another process of the technology described in this specification. The processing module 501 may be configured to support the communication apparatus 500 in performing a processing action in the foregoing method embodiments, for example, support the terminal device in performing another process of the technology described in this specification.

Specifically, the transceiver module 502 is configured to receive first information and second information from the network device, where the first information indicates an index of a first DMRS port, in a DMRS port set, associated with a first PTRS port, and the second information indicates a first offset index; a DMRS type is a type 1, and a quantity of DMRS ports in the DMRS port set is greater than 4; or a DMRS type is a type 2, and a quantity of DMRS ports in the DMRS port set is greater than 6; and a frequency domain position occupied by the first PTRS port is determined based on the index of the first DMRS port, the first offset index, and a preset correspondence.

Optionally, the transceiver module 502 is further configured to receive third information from the network device, where the third information indicates a DMRS port capacity expansion manner, and the capacity expansion manner includes a first capacity expansion manner or a second capacity expansion manner.

Optionally, an offset corresponding to the index of the first DMRS port and the first offset index is determined based on an offset corresponding to an index of a second DMRS port in the DMRS port set and the first offset index, and the index of the first DMRS port has an association relationship with the index of the second DMRS port.

Optionally, that the index of the first DMRS port has the association relationship with the index of the second DMRS port includes: the DMRS type is the type 1, the capacity expansion manner is the first capacity expansion manner, the index of the first DMRS port is a first index, and a difference between the index of the first DMRS port and the index of the second DMRS port is 8.

Optionally, the offset $R_{offset1}$ corresponding to the index of the first DMRS port and the first offset index satisfies the following formula: $R_{offset1} = (R_{offset2} + 4)mod12$, where $R_{offset2}$ is the offset corresponding to the index of the second DMRS port and the first offset index.

Optionally, that the index of the first DMRS port has the association relationship with the index of the second DMRS port includes: the DMRS type is the type 1, the capacity expansion manner is the second capacity expansion manner, the index of the first DMRS port is a second index, and a difference between the index of the first DMRS port and the index of the second DMRS port is 8 or 10.

Optionally, the offset $R_{offset1}$ corresponding to the index of the first DMRS port and the first offset index satisfies the following formula: $R_{offset1} = (R_{offset2} + 4)mod12$; $R_{offset1} = (R_{offset2} + 8)mod12$; $R_{offset1} = (R_{offset2} + 6)mod24$; or $R_{offset1} = (R_{offset2} + 12)mod24$, where $R_{offset2}$ is the offset corresponding to the index of the second DMRS port and the first offset index.

Optionally, that the index of the first DMRS port has the association relationship with the index of the second DMRS port includes: the DMRS type is the type 2, the capacity expansion manner is the first capacity expansion manner, the index of the first DMRS port is a third index, and a difference between the index of the first DMRS port and the index of the second DMRS port is 12.

Optionally, the offset $R_{offset1}$ corresponding to the index of the first DMRS port and the first offset index satisfies the following formula: $R_{offset1} = (R_{offset2} + 6)mod12$, where $R_{offset2}$ is the offset corresponding to the index of the second DMRS port and the first offset index.

Optionally, that the index of the first DMRS port has the association relationship with the index of the second DMRS port includes: the DMRS type is the type 2, the capacity expansion manner is the second capacity expansion manner, the index of the first DMRS port is a fourth index, and a difference between the index of the first DMRS port and the index of the second DMRS port is 12 or 14.

Optionally, the offset $R_{offset1}$ corresponding to the index of the first DMRS port and the first offset index satisfies the following formula: $R_{offset1} = (R_{offset2} + 6)mod12$; $R_{offset1} = (R_{offset2} + 6)mod24$; or $R_{offset1} = (R_{offset2} + 12)mod24$, where $R_{offset2}$ is the offset corresponding to the index of the second DMRS port and the first offset index.

In a possible implementation, when the terminal device or the network device is a chip, the transceiver module 502 may be a communication interface, a pin, a circuit, or the like. The communication interface may be configured to input to-be-processed data into the processor, and may output a processing result of the processor to the outside. During specific implementation, the communication interface may be a general-purpose input/output (general-purpose input/output, GPIO) interface, and may be connected to a plurality of peripheral devices (for example, a display (LCD), a camera (camera), a radio frequency (radio frequency, RF) module, and an antenna). The communication interface is connected to the processor through a bus.

The processing module 501 may be a processor. The processor may execute computer-executable instructions stored in the storage module, so that the chip performs the method in the embodiment shown in FIG. 4.

Further, the processor may include a controller, an arithmetic unit, and a register. For example, the controller is mainly responsible for instruction decoding, and transmitting a control signal for an operation corresponding to the instructions. The arithmetic unit is mainly responsible for performing a fixed-point or floating-point arithmetic operation, a shift operation, a logic operation, and the like, and may also perform an address operation and address translation. The register is mainly responsible for saving a quantity of register operations, intermediate operation results, and the like that are temporarily stored during instruction execution. During specific implementation, a hardware architecture of the processor may be an ASIC architecture, a microprocessor without interlocked piped stages (microprocessor without interlocked piped stages, MIPS) architecture, an advanced reduced instruction set computer machines (advanced RISC machines, ARM) architecture, a second processor (network processor, NP) architecture, or the like. The processor may be a single-core or multi-core processor.

The storage module may be a storage module inside the chip, for example, a register or a cache. Alternatively, the storage module may be a storage module, for example, a ROM, another type of static storage device that can store static information and instructions, or a RAM, located outside the chip.

It should be noted that a function corresponding to each of the processor and the interface may be implemented by using a hardware design, may be implemented by using a software design, or may be implemented by a combination of software and hardware. This is not limited herein.

FIG. 6 is a diagram of a simplified structure of a terminal device according to an embodiment of this application. For ease of understanding and illustration, in FIG. 6, a mobile phone is used as an example of the terminal device. As shown in FIG. 6, the terminal device includes at least one processor, and may further include a radio frequency circuit, an antenna, and an input/output apparatus. The processor may be configured to process a communication protocol and communication data, and may be further configured to control the terminal device, execute a software program, process data of the software program, and the like. The terminal device may further include a memory. The memory is mainly configured to store a software program and data. These related programs may be loaded into the memory when the communication apparatus is delivered from a factory, or may be loaded into the memory when needed later. The radio frequency circuit is mainly configured to: perform conversion between a baseband signal and a radio frequency signal, and process the radio frequency signal. The antenna is mainly configured to receive/send a radio frequency signal in an electromagnetic wave form, and the antenna is the antenna provided in embodiments of this application. The input/output apparatus, for example, a touchscreen, a display, or a keyboard, is mainly configured to: receive data input by a user and output data to the user. It should be noted that some types of terminal devices may have no input/output apparatus.

When data needs to be sent, after performing baseband processing on the to-be-sent data, the processor outputs a baseband signal to the radio frequency circuit. The radio frequency circuit performs radio frequency processing on the baseband signal and then sends the radio frequency signal to the outside in a form of an electromagnetic wave through the antenna. When data is sent to the terminal device, the radio frequency circuit receives the radio frequency signal through the antenna, converts the radio frequency signal into a baseband signal, and outputs the baseband signal to the processor. The processor converts the baseband signal into data, and processes the data. For ease of description, FIG. 6 shows only one memory and one processor. In an actual terminal device product, there may be one or more processors and one or more memories. The memory may also be referred to as a storage medium, a storage device, or the like. The memory may be disposed independent of the processor, or may be integrated with the processor. This is not limited in embodiments of this application.

In this embodiment of this application, an antenna having sending and receiving functions and the radio frequency circuit may be considered as a receiving unit and a sending unit (which may also be collectively referred to as a transceiver unit) of the terminal device, and a processor having a processing function may be considered as a processing unit of the terminal device. As shown in FIG. 6, the terminal device includes a receiving module 31, a processing module 32, and a sending module 33. The receiving module 31 may also be referred to as a receiver, a receiving machine, a receiver circuit, or the like. The sending module 33 may also be referred to as a sender, a transmitter, a transmitter machine, a transmitter circuit, or the like. The processing module 32 may also be referred to as a processor, a processing board, a processing apparatus, or the like.

For example, the processing module 32 is configured to perform a function of the terminal device in the embodiment shown in FIG. 4.

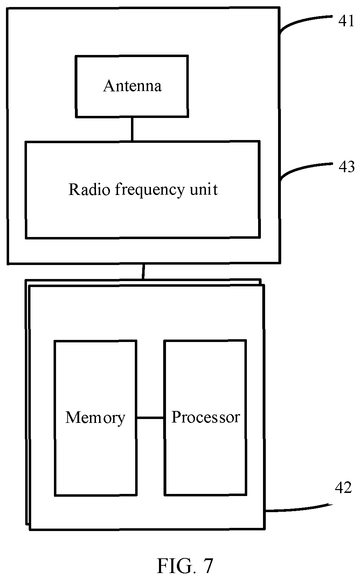

FIG. 7 is a diagram of a simplified structure of a network device according to an embodiment of this application. The network device includes a baseband part 42 and a part for radio frequency signal transmission/reception and conversion. The part for radio frequency signal transmission/reception and conversion further includes a receiving module 41 part and a sending module 43 part (which may also be collectively referred to as a transceiver module). The part for radio frequency signal transmission/reception and conversion is mainly configured to: send/receive a radio frequency signal and perform conversion between a radio frequency signal and a baseband signal. The baseband part 42 is mainly configured to: perform baseband processing, control the network device, and the like. The receiving module 41 may also be referred to as a receiver, a receiving machine, a receiver circuit, or the like. The sending module 43 may also be referred to as a sender, a transmitter, a transmitter machine, a transmitter circuit, or the like. The baseband part 42 is usually a control center of the network device, may also be referred to as a processing module, and is configured to perform the steps performed by the network device in the embodiment shown in FIG. 4. For details, refer to the foregoing descriptions of the related parts.

The baseband part 42 may include one or more boards. Each board may include one or more processors and one or more memories. The processor is configured to read and execute a program in the memory, to implement a baseband processing function and control the network device. If there are a plurality of boards, the boards may be interconnected to improve a processing capability. In an optional implementation, the plurality of boards may share one or more processors, or the plurality of boards share one or more memories, or the plurality of boards share one or more processors at the same time.

For example, the sending module 43 is configured to perform a function of the network device in the embodiment shown in FIG. 4.

An embodiment of this application further provides a communication apparatus, including a processor. The processor is coupled to a memory. The memory stores a computer program. The processor is configured to invoke the computer program in the memory, so that the communication apparatus performs the embodiment shown in FIG. 4.

An embodiment of this application further provides a communication apparatus, including a processor and an interface circuit. The interface circuit is configured to: receive a signal from another communication apparatus other than the communication apparatus and transmit the signal to the processor, or send a signal from the processor to another communication apparatus other than the communication apparatus. The processor is configured to implement the embodiment shown in FIG. 4 by using a logic circuit or by executing code instructions.

An embodiment of this application further provides a computer-readable storage medium. The storage medium stores a computer program or instructions. When the computer program or the instructions are executed by a computer, the embodiment shown in FIG. 4 is implemented.

An embodiment of this application further provides a computer program product. When a computer reads and executes the computer program product, the computer is enabled to perform the embodiment shown in FIG. 4.

The terms "system" and "network" may be used interchangeably in embodiments of this application. "/" represents an "or" relationship between associated objects unless otherwise specified. For example, A/B may represent A or B. The term "and/or" in this application is merely an association relationship for describing associated objects, and represents that three relationships may exist. For example, A and/or B may represent the following three cases: Only A exists, both A and B exist, and only B exists, where A and B each may be singular or plural. In addition, in the descriptions of this application, "a plurality of" means two or more than two unless otherwise specified. "At least one of the following items (pieces)" or a similar expression thereof means any combination of these items, including a single item (piece) or any combination of a plurality of items (pieces). For example, at least one item (piece) of a, b, or c may represent: a, b, c, a and b, a and c, b and c, or a, b, and c, where a, b, and c may be singular or plural. In addition, to clearly describe the technical solutions in embodiments of this application, the terms such as "first" and "second" are used in embodiments of this application to distinguish between same items or similar items that provide basically same network elements or purposes. A person skilled in the art may understand that the terms such as "first" and "second" do not limit a quantity or an execution sequence, and the terms such as "first" and "second" do not indicate a definite difference.

Reference to "an embodiment", "some embodiments", or the like described in embodiments of this application indicates that one or more embodiments of this application include a specific feature, structure, or characteristic described with reference to embodiments. Therefore, statements such as "in an embodiment", "in some embodiments", "in some other embodiments", and "in other embodiments" that appear at different places in this specification do not necessarily mean referring to a same embodiment. Instead, the statements mean "one or more but not all of embodiments", unless otherwise specifically emphasized in another manner. The terms "include", "comprise", "have", and their variants all mean "include but are not limited to", unless otherwise specifically emphasized in another manner.

The objectives, technical solutions, and beneficial effects of this application are further described in detail in the foregoing specific implementations. It should be understood that the foregoing descriptions are merely specific implementations of this application, but are not intended to limit the protection scope of this application. Any modification, equivalent replacement, or improvement made based on the technical solutions of this application shall fall within the protection scope of this application.

In various embodiments of this application, unless otherwise stated or there is a logic conflict, terms and/or descriptions in different embodiments are consistent and may be mutually referenced, and technical features in different embodiments may be combined based on an internal logical relationship thereof, to form a new embodiment.

The units described as separate parts may or may not be physically separate, and parts displayed as units may or may not be physical units, may be located in one place, or may be distributed on a plurality of network units. Some or all of the units may be selected based on an actual requirement, to achieve the objectives of the solutions in embodiments of this application. In addition, network element units in embodiments of this application may be integrated into one processing unit, or each of the units may exist alone physically, or two or more units are integrated into one unit. The integrated unit may be implemented in a form of hardware, or may be implemented in a form of a software network element unit.

When the integrated unit is implemented in the form of the software network element unit and sold or used as an independent product, the integrated unit may be stored in a computer-readable storage medium. Based on such an understanding, an essentially contributing part in the technical solutions of this application, or all or some of the technical solutions may be embodied in a form of a software product. The computer software product is stored in a storage medium and includes several instructions for instructing a computer device (which may be a personal computer, a terminal device, a cloud server, a network device, or the like) to perform all or some of the steps of the method in embodiments of this application. The foregoing storage medium includes any medium that can store program code, such as a USB flash drive, a removable hard disk, a read-only memory (ROM, Read-Only Memory), a random access memory (RAM, Random Access Memory), a magnetic disk, or an optical disc. The foregoing descriptions are merely specific implementations of this application, but are not intended to limit the protection scope of this application. Any modification or replacement readily figured out by a person skilled in the art within the technical scope disclosed in this application shall fall within the protection scope of this application. Therefore, the protection scope of this application shall be subject to the protection scope of the claims.

**Claims**

1. A communication method, comprising:

   receiving first information and second information from a network device, wherein the first information indicates an index of a first demodulation reference signal, DMRS port, in a DMRS port set, associated with a first phase tracking reference signal PTRS port, and the second information indicates a first offset index;
   the DMRS type is a type 1, and a quantity of DMRS ports in the DMRS port set is greater than 4; or
   the DMRS type is a type 2, and a quantity of DMRS ports in the DMRS port set is greater than 6; and
   a frequency domain position occupied by the first PTRS port is determined based on the index of the first DMRS port, the first offset index, and a preset correspondence.

2. The method according to claim 1, wherein the method further comprises:
   receiving third information from the network device, wherein the third information indicates a DMRS port capacity expansion manner, and the capacity expansion manner comprises a first capacity expansion manner or a second capacity expansion manner.

3. The method according to claim 1 or 2, wherein an offset corresponding to the index of the first DMRS port and the first offset index is determined based on an offset corresponding to an index of a second DMRS port in the DMRS port set and the first offset index, and the index of the first DMRS port has an association relationship with the index of the second DMRS port.

4. The method according to claim 3, wherein that the index of the first DMRS port has the association relationship with the index of the second DMRS port comprises:
   the DMRS type is the type 1, the capacity expansion manner is the first capacity expansion manner, the index of the first DMRS port is a first index, and a difference between the index of the first DMRS port and the index of the second DMRS port is 8.

5. The method according to claim 3 or 4, wherein the offset $R_{offset1}$ corresponding to the index of the first DMRS port and the first offset index satisfies the following formula:

$$R_{offset1} = (R_{offset2} + 4) mod 12,$$

wherein
$R_{offset2}$ is the offset corresponding to the index of the second DMRS port and the first offset index.

6. The method according to claim 3, wherein that the index of the first DMRS port has the association relationship with the index of the second DMRS port comprises:
the DMRS type is the type 1, the capacity expansion manner is the second capacity expansion manner, the index of the first DMRS port is a second index, and a difference between the index of the first DMRS port and the index of the second DMRS port is 8 or 10.

7. The method according to claim 3 or 6, wherein the offset $R_{offset1}$ corresponding to the index of the first DMRS port and the first offset index satisfies the following formula:

$$R_{offset1} = (R_{offset2} + 4) mod 12;$$

$$R_{offset1} = (R_{offset2} + 8) mod 12;$$

$$R_{offset1} = (R_{offset2} + 6) mod 24;$$

or

$$R_{offset1} = (R_{offset2} + 12) mod 24,$$

wherein
$R_{offset2}$ is the offset corresponding to the index of the second DMRS port and the first offset index.

8. The method according to claim 3, wherein that the index of the first DMRS port has the association relationship with the index of the second DMRS port comprises:
the DMRS type is the type 2, the capacity expansion manner is the first capacity expansion manner, the index of the first DMRS port is a third index, and a difference between the index of the first DMRS port and the index of the second DMRS port is 12.

9. The method according to claim 8, wherein the offset $R_{offset1}$ corresponding to the index of the first DMRS port and the first offset index satisfies the following formula:

$$R_{offset1} = (R_{offset2} + 6) mod 12,$$

wherein
$R_{offset2}$ is the offset corresponding to the index of the second DMRS port and the first offset index.

10. The method according to claim 3, wherein that the index of the first DMRS port has the association relationship with the index of the second DMRS port comprises:
the DMRS type is the type 2, the capacity expansion manner is the second capacity expansion manner, the index of the first DMRS port is a fourth index, and a difference between the index of the first DMRS port and the index of the second DMRS port is 12 or 14.

11. The method according to claim 3 or 10, wherein the offset $R_{offset1}$ corresponding to the index of the first DMRS port and the first offset index satisfies the following formula:

$$R_{offset1} = (R_{offset2} + 6) mod 12;$$

$$R_{offset1} = (R_{offset2} + 6) mod 24;$$

or

$$R_{offset1} = (R_{offset2} + 12) mod 24,$$

wherein
$R_{offset2}$ is the offset corresponding to the index of the second DMRS port and the first offset index.

12. A communication apparatus, wherein the communication apparatus comprises a module configured to perform the method according to any one of claims 1 to 11.

13. A communication apparatus, comprising a processor, wherein the processor is coupled to a memory, and the memory stores a computer program; and the processor is configured to invoke the computer program in the memory, to enable the communication apparatus to perform the method according to any one of claims 1 to 11.

14. A communication apparatus, comprising a processor and an interface circuit, wherein the interface circuit is configured to: receive a signal from a communication apparatus other than the communication apparatus and transmit the signal to the processor, or send a signal from the processor to a communication apparatus other than the communication apparatus; and the processor is configured to implement the method according to any one of claims 1 to 11 by using a logic circuit or by executing code instructions.

15. A computer-readable storage medium, wherein the storage medium stores a computer program or instructions, and when the computer program or the instructions are executed by a computer, the method according to any one of claims 1 to 11 is implemented.

16. A computer program product, wherein when a computer reads and executes the computer program product, the computer is enabled to perform the method according to any one of claims 1 to 11.

CDM 0 port 0/1/4/5

CDM 1 port 2/3/6/7

1-1

CDM 0 port 0/1/6/7

CDM 1 port 2/3/8/9

CDM 2 port 4/5/10/11

1-2

FIG. 1

FIG. 2A

FIG. 2B

300

301

307

304

Processor

CPU 0

CPU 1

Processor

CPU 0

CPU 1

Communication
line 302

Memory

303

305

306

Communication
interface

Output device

Input device

FIG. 3

Terminal device

Network device

401: Receive first information and second
information that are sent by the network device,
where the first information indicates an index of a
first DMRS port in a DMRS port set associated with
a first PTRS port, and the second information
indicates a first offset index; a DMRS type is a type
1, and a quantity of DMRS ports in the DMRS port
set is greater than 4; or a DMRS type is a type 2,
and a quantity of DMRS ports in the DMRS port set
is greater than 6; and a frequency domain position
occupied by the first PTRS port is determined based
on the index of the first DMRS port, the first offset
index, and a preset correspondence

FIG. 4

FIG. 5

FIG. 6

FIG. 7

## INTERNATIONAL SEARCH REPORT

| International application No. |
|---|
| **PCT/CN2023/143303** |

**A.     CLASSIFICATION OF SUBJECT MATTER**

H04W72/0453(2023.01)i

According to International Patent Classification (IPC) or to both national classification and IPC

**B.     FIELDS SEARCHED**

Minimum documentation searched (classification system followed by classification symbols)

IPC: H04W

Documentation searched other than minimum documentation to the extent that such documents are included in the fields searched

Electronic data base consulted during the international search (name of data base and, where practicable, search terms used)

CNTXT; CNABS; CNKI; VEN; WOTXT; USTXT; EPTXT; 3GPP: 相位追踪参考信号, 解调参考信号, 索引, 偏置, 偏移, Phase Tracking Reference Signal, PTRS, Demodulation Reference Signal, DMRS, index, offset

**C.     DOCUMENTS CONSIDERED TO BE RELEVANT**

| Category* | Citation of document, with indication, where appropriate, of the relevant passages | Relevant to claim No. |
|---|---|---|
| PX | CN 116015569 A (BEIJING UNISOC COMMUNICATIONS TECHNOLOGY CO., LTD.) 25 April 2023 (2023-04-25) description, paragraphs [0021]-[0026] and [0040]-[0091] | 1-16 |
| X | CN 111527729 A (TELEFONAKTIEBOLAGET LM ERICSSON (PUBL)) 11 August 2020 (2020-08-11) description, paragraphs [0150]-[0152] and [0170]-[0310] | 1-16 |
| X | CN 114631375 A (HUAWEI TECHNOLOGIES CO., LTD.) 14 June 2022 (2022-06-14) description, paragraphs [0072]-[0133] and [0184]-[203] | 1-16 |
| A | CN 111698075 A (SPREADTRUM SEMICONDUCTOR (NANJING) CO., LTD.) 22 September 2020 (2020-09-22) entire document | 1-16 |
| A | US 2021258200 A1 (LG ELECTRONICS INC.) 19 August 2021 (2021-08-19) entire document | 1-16 |

☐ Further documents are listed in the continuation of Box C.     ☑ See patent family annex.

| | | | |
|---|---|---|---|
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
|---|---|
| **14 March 2024** | **20 March 2024** |

| Name and mailing address of the ISA/CN | Authorized officer |
|---|---|
| **China National Intellectual Property Administration (ISA/CN)** **China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**
Information on patent family members

International application No.

**PCT/CN2023/143303**

| Patent document cited in search report | | | Publication date (day/month/year) | Patent family member(s) | | | Publication date (day/month/year) |
|---|---|---|---|---|---|---|---|
| CN | 116015569 | A | 25 April 2023 | WO | 2023066382 | A1 | 27 April 2023 |
| CN | 111527729 | A | 11 August 2020 | CA | 3082587 | A1 | 23 May 2019 |
| | | | | CA | 3082587 | C | 13 December 2022 |
| | | | | US | 2020366436 | A1 | 19 November 2020 |
| | | | | US | 11528111 | B2 | 13 December 2022 |
| | | | | KR | 20200081451 | A | 07 July 2020 |
| | | | | KR | 102418425 | B1 | 06 July 2022 |
| | | | | US | 2019215118 | A1 | 11 July 2019 |
| | | | | US | 10805052 | B2 | 13 October 2020 |
| | | | | EP | 3711271 | A1 | 23 September 2020 |
| | | | | EP | 3711271 | B1 | 05 January 2022 |
| | | | | ES | 2908256 | T3 | 28 April 2022 |
| | | | | BR | 112020009649 | A2 | 10 November 2020 |
| | | | | JP | 2021503805 | A | 12 February 2021 |
| | | | | JP | 7197580 | B2 | 27 December 2022 |
| | | | | RU | 2754431 | C1 | 02 September 2021 |
| | | | | WO | 2019096919 | A1 | 23 May 2019 |
| | | | | MX | 2020005098 | A | 13 August 2020 |
| | | | | EP | 4009567 | A1 | 08 June 2022 |
| | | | | DK | 3711271 | T3 | 31 January 2022 |
| | | | | CO | 2020006136 | A2 | 29 May 2020 |
| | | | | PL | 3711271 | T3 | 25 April 2022 |
| | | | | US | 2023103846 | A1 | 06 April 2023 |
| | | | | US | 11902205 | B2 | 13 February 2024 |
| CN | 114631375 | A | 14 June 2022 | WO | 2021088078 | A1 | 14 May 2021 |
| CN | 111698075 | A | 22 September 2020 | CN | 111698075 | B | 28 February 2023 |
| US | 2021258200 | A1 | 19 August 2021 | US | 11558234 | B2 | 17 January 2023 |
| | | | | WO | 2019235756 | A1 | 12 December 2019 |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202310002176X